# EUROPÄISCHE PATENTSCHRIFT

(11) **EP 3 555 015 B1**
(45) Veröffentlichungstag und Bekanntmachung des Hinweises auf die Patenterteilung: **29.05.2024**
(21) Anmeldenummer: 17826489.1
(22) Anmeldetag: 19.12.2017
(51) Int. Cl.: C04B 7/24

(54) **VERFAHREN UND VORRICHTUNG ZUR HERSTELLUNG EINES HYDRAULISCHEN BINDEMITTELS DURCH AUFBEREITUNG EINES BAURESTSTOFFES**
METHOD AND DEVICE FOR PRODUCING A HYDRAULIC BINDER BY TREATMENT OF A BUILDING MATERIAL RESIDUE
PROCÉDÉ ET DISPOSITIF POUR PRODUIRE UN LIANT HYDRAULIQUE EN TRAITANT UN RÉSIDU DE CONSTRUCTION

(30) Priorität: 19.12.2016 DE 102016225453
(43) Veröffentlichungstag der Anmeldung: 23.10.2019
(73) Patentinhaber: Netzsch Trockenmahltechnik GmbH, 63457 Hanau (DE); Hochschule Wismar University Of Applied Sciences Technology, Business And Design, 23966 Wismar (DE); Firma IBU BAU + TEC UG (Haftungsbeschränkt), 65189 Wiesbaden (DE)
(72) Erfinder: ENDERLE, Udo, 95659 Arzberg (DE); SIMON, Claus, 63755 Alzenau (DE); PERBIX, Wolfgang, 65189 Wiesbaden (DE); MALORNY, Winfred, 23968 Wismar (DE)
(74) Vertreter: Rau, Schneck & Hübner Patentanwälte Rechtsanwälte PartGmbB
(86) Internationale Anmeldenummer: PCT/EP2017/083544
(87) Internationale Veröffentlichungsnummer: WO 2018/114951

(56) Entgegenhaltungen:
- DE-A1-102006 049 836
- KR-B1- 101 061 018
- Heechan Cho ET AL: "Development of Recycled Aggregate Producing Circuit Using Autogenous mill dnsn View project National Strategic Project-Carbon Mineralization Flagship Center View project", , 31 January 2007 (2007-01-31), XP055680281, Retrieved from the Internet: URL:https://www.researchgate.net/profile/J i-Whan_Ahn/publication/263997527_Developme nt_of_Recycled_Aggregate_Producing_Circuit _Using_Autogenous_mill/links/54effb2a0cf25 f74d723464a/Development-of-Recycled-Aggreg ate-Producing-Circuit-Using-Autogenous-mil l.pdf [retrieved on 2020-03-27]

## Beschreibung

Die vorliegende Patentanmeldung nimmt die Priorität der deutschen Patentanmeldung DE 10 2016 225 453.7 in Anspruch.

Die Erfindung betrifft ein Verfahren und eine Vorrichtung zur Herstellung eines hydraulischen Bindemittels durch Aufbereitung eines Baureststoffs.

Aus der DE 10 2006 049 836 B4 ist ein Verfahren zur Herstellung eines hydraulisch erhärtenden Bindemittels aus Zementstein enthaltenden Baureststoffen bekannt. Die Baureststoffe werden auf eine Korngröße von kleiner als 10 mm zerkleinert. Die Zerkleinerung erfolgt beispielsweise mittels einer Kugelmühle. Aufgrund der geringen Bindungskräfte zwischen dem Zementstein, also der Bindephase, und dem ursprünglichen Zuschlagstoff wird der Zementstein von dem Zuschlagstoff abgelöst und derart zerkleinert, dass der Zementstein anschließend von dem ursprünglichen Zuschlagstoff separiert werden kann. Der separierte Zementstein wird auf 600 °C bis 800 °C erhitzt, so dass der Zementstein wieder aktiviert wird und ein hydraulisch erhärtendes Bindemittel entsteht.

Aus der DE 196 41 583 C2 ist ein Verfahren zur Herstellung von hydraulisch aktiven Mineralphasen aus Betonabfällen bekannt. Der Betonabfall wird zunächst mechanisch aufbereitet und erwärmt. Anschließend wird der aufbereitete Betonabfall mittels einer Kugelmühle gemahlen und störende Füllstoffe abgesiebt. Die verbleibende Bindemittelphase wird zur Herstellung von hydraulisch aktiven Mineralphasen erhitzt.

Aus der Druckschrift DE 2 058 447 A ist ein Verfahren zur Herstellung von schmelzbaren Feststoffen bekannt, in die feinst verteilte Pigmente mit Zusätzen und Füllstoffen eingearbeitet werden.

Aus der KR 101 061 018 B1 ist ein Verfahren zum Aufbereiten eines Baureststoffes zur Herstellung eines feinkörnigen Zuschlagstoffes bekannt.

Der Artikel "Development of Recycled Aggregate Producing Circuit Using Agutenous mill" offenbart ein Verfahren zum Aufbereiten eines Baureststoffes unter Verwendung einer autogenen Mühle.

Der Erfindung liegt die Aufgabe zugrunde, ein einfaches und energieeffizientes Verfahren zur Herstellung eines hydraulischen Bindemittels durch Aufbereitung eines Baureststoffs zu schaffen.

Diese Aufgabe wird durch ein Verfahren mit den Merkmalen des Anspruchs 1 gelöst. Bei dem autogenen Mahlen in der mindestens einen Rührwerksmühle dienen die Körner des Baureststoffs selbst als Mahlkörper, so dass sich die Körner gegenseitig mechanisch bearbeiten und der in dem Baureststoff enthaltene Zementstein mechanisch abgetrennt wird. Nach dem Abtrennen verbleibt von dem Baureststoff idealerweise der Füllstoff, also beispielsweise bei Abbruchbeton als Baureststoff der ursprüngliche Zuschlagsstoff, und der abgetrennte, lose Zementstein. Das Mahlen erfolgt autogen und insbesondere selektiv. Durch das autogene Mahlen wird im Wesentlichen ein mechanisches Abtrennen des Zementsteins ohne eine Zerkleinerung des Füllstoffs erzielt, wodurch das Abtrennen energieeffizient ist. Das selektive Mahlen erfolgt insbesondere derart, dass die in den Baureststoff eingebrachte Energie nicht in einer Kraft resultiert, die die im Baureststoff enthaltenen Inertkörner zerstören würde. Anders ausgedrückt, darf eine aus der eingebrachten Energie resultierende Kraft nicht höher sein als die Kraft, welche benötigt wird, um die im Baureststoff enthaltenen Inertkörner zu zerstören. Um das Abtrennen des Zementsteins zu vereinfachen, wird der Baureststoff auf eine Temperatur von mindestens 80 °C erwärmt, so dass die Bindung zwischen dem Zementstein und dem Füllstoff geschwächt wird. Das Aktivieren des Zementsteins erfolgt durch eine Erwärmung auf eine Temperatur von mindestens 500°C. Das Aktivieren des Zementsteins erfolgt entweder zusammen mit dem Erwärmen des Baureststoffs derart, dass der Baureststoff zum Schwächen der Bindung zwischen dem Zementstein und dem Füllstoff und zum Aktivieren des Zementsteins auf mindestens 500°C erwärmt wird, oder getrennt von dem Erwärmen des Baureststoffs derart, dass der Baureststoff zum Schwächen der Bindung zwischen dem Zementstein und dem Füllstoff zunächst auf mindestens 80°C erwärmt und anschließend der abgetrennte Zementstein zum Aktivieren auf mindestens 500°C erwärmt wird. Als Füllstoff sind insbesondere die sich beim Bindungsprozess chemisch inert verhaltenden Teile des Baureststoffs bezeichnet. Der Füllstoff umfasst insbesondere Gesteinskörnung, die beispielsweise aus Sand oder Kies besteht, und sonstige Zuschläge. Der Zementstein umfasst hydraulisch erhärtendes Bindemittel, insbesondere einschließlich nicht hydratisierter Bestandteile.

Der Baureststoff wird der mindestens einen Rührwerksmühle in Form von Körnern zugeführt. Die Körner haben eine Korngröße von höchstens 63 mm, insbesondere von höchstens 32 mm, insbesondere von höchstens 24 mm, und insbesondere von höchstens 16 mm.

Das autogene Mahlen erfolgt in der mindestens einen Rührwerksmühle. Die jeweilige Rührwerksmühle umfasst einen Mahlbehälter, der einen Mahlraum umschließt. Der Mahlbehälter weist mindestens eine Zuführöffnung und mindestens eine Austragsöffnung auf. In dem Mahlraum ist eine Rührwerkswelle angeordnet, die mittels eines Antriebsmotors drehantreibbar ist bzw. drehangetrieben wird. An der Rührwerkswelle sind Rührwerkzeuge angeordnet, die beispielsweise als Rührstäbe ausgebildet sind. Im Unterschied zu einer Rührwerkskugelmühle weist die Rührwerksmühle keine eigenen losen Mahlkörper in dem Mahlraum auf.

Die mit dem Baureststoff gefüllte mindestens eine Rührwerksmühle wird mit einem Füllgrad zwischen 40 Vol.-% und 90 Vol.-%, insbesondere zwischen 40 Vol.-% und 80 Vol.-%, und insbesondere zwischen 50 Vol.-% und 70 Vol.-% betrieben.

Die mindestens eine Rührwerksmühle weist vorzugsweise eine einstellbare Austragsöffnung auf. Hierdurch wird die Intensität des Mahlens durch eine Verlängerung der Verweilzeit des Baureststoffs in der Rührwerksmühle gesteuert.

Beim Aktivieren des Zementsteins entsteht Dicalciumsilikat in Phasen, die wesentlich reaktiver sind als die im technischen Zementklinker enthaltene Belit-Phase. Die Phasenbildungsbedingungen bei der thermisch induzierten Dicalciumsilikat-Entstehung aus dem im Zementstein enthaltenen Calciumsilikat unterscheiden sich maßgeblich von denen des Zementklinkerbrandes, wobei die durch das Aktivieren entstehenden Phasen reaktiver sind und so ein hydraulisches Bindemittel entsteht, das eine normzement-ähnliche Festigkeitsentwicklung hat.

Der Calciumsilikathydrat gebundene Baureststoff ist insbesondere mindestens einer der Stoffe Abbruchbeton, Betonbrechsand, hydraulische Mörtel, Porenbetonbruch und Kalksandsteinbruch.

Das erfindungsgemässe Verfahren gewährleistet ein einfaches und energieeffizientes mechanisches Abtrennen des Zementsteins. Das mehrfache Durchlaufen der mindestens einen Rührwerksmühle wird durch ein Zurückführen von Baureststoff in die mindestens eine Rührwerksmühle und/oder eine Reihenschaltung von mehreren Rührwerksmühlen erzielt. Durch das mehrfache Durchführen des Baureststoffs wird das mechanische Behandeln des Baureststoffs in der mindestens einen Rührwerksmühle wiederholt. Hierdurch wird in einfacher Weise thermisch vorbehandelter bzw. thermisch umgewandelter Zementstein, der dem Füllstoff noch anhaftet, mechanisch abgetrennt.

Das erfindungsgemässe Verfahren gewährleistet ein einfaches und energieeffizientes mechanisches Abtrennen des Zementsteins. Durch das Zurückführen des ausgetragenen Baureststoffs wird das mechanische Behandeln des zurückgeführten Baureststoffs in der mindestens einen Rührwerksmühle wiederholt. Vorzugsweise kommt genau eine Rührwerksmühle zum Einsatz. Durch die Anzahl N wird einerseits sichergestellt, dass der anhaftende Zementstein möglichst vollständig mechanisch abgetrennt wird. Andererseits wird durch die Anzahl N eine unnötige Zerkleinerung des im Baureststoff enthaltenen Füllstoffs, insbesondere nachdem der Zementstein bereits mechanisch abgetrennt wurde, vermieden. Vorzugsweise wird bereits abgetrennter Zementstein vor der Rückführung von dem ausgetragenen Baureststoff separiert. Die Rückführung kann quasi-kontinuierlich oder kontinuierlich erfolgen.

Bei der quasi-kontinuierlichen Rückführung wird die Rührwerksmühle im Batchbetrieb betrieben. Dies bedeutet, dass die in die Rührwerksmühle zugeführte Baureststoffcharge, insbesondere nach dem Separieren des bereits abgetrennten Zementsteins, wieder in die Rührwerksmühle zurückgeführt wird. Der Baureststoff wird N-mal zurückgeführt, so dass dieser die Rührwerksmühle (N + 1)-mal durchläuft.

Beim kontinuierlichen Betrieb wird abgetrennter Zementstein und/oder Füllstoff von dem ausgetragenen Baureststoff separiert, wobei der Baureststoff wieder zurückgeführt wird und der separierte Zementstein und/oder der separierte Füllstoff anteilig durch neuen Baureststoff ersetzt wird. Beispielsweise wird Füllstoff, der eine definierte Partikelgröße unterschreitet, separiert und/oder Füllstoff bzw. Baureststoff, der eine definierte Partikelgröße überschreitet, separiert. Vorzugsweise wird lediglich Baureststoff mit einer Partikelgröße in einem definierten Bereich zurückgeführt. Bei dem kontinuierlichen Betrieb wird zumindest ein Teil des Baureststoffs N-mal zurückgeführt.

Das erfindungsgemässe Verfahren gewährleistet ein einfaches und energieeffizientes mechanisches Abtrennen des Zementsteins. Durch das Erwärmen wird der Baureststoff entfestigt, also die Bindung zwischen dem Zementstein und dem Füllstoff geschwächt. Hierdurch ist der Zementstein in der mindestens einen Rührwerksmühle einfacher von dem Füllstoff mechanisch abtrennbar. Der Energieaufwand zum Erwärmen des Baureststoffs wird durch die Energieeinsparung beim mechanischen Abtrennen in der mindestens einen Rührwerksmühle überkompensiert.

Das erfindungsgemässe Verfahren gewährleistet ein einfaches und energieeffizientes mechanisches Abtrennen des Zementsteins. Das Erwärmen des Baureststoffs erfolgt mittels mindestens einer Energiequelle, insbesondere einer Heizeinrichtung. Die mindestens eine Energiequelle, insbesondere Heizeinrichtung, ist vor der mindestens einen Rührwerksmühle und/oder an der mindestens einen Rührwerksmühle angeordnet, insbesondere in die mindestens eine Rührwerksmühle integriert.

Das erfindungsgemässe Verfahren gewährleistet eine einfache und energieeffiziente Herstellung des hydraulischen Bindemittels. Durch das Erwärmen wird der Zementstein aktiviert und bildet so das hydraulische Bindemittel aus. Je höher die Temperatur ist, desto kürzer ist die erforderliche Aktivierungsdauer. Bei einer zu hohen Temperatur nimmt die mit dem hydraulischen Bindemittel erzielbare Festigkeitsentwicklung wieder ab.

Das erfindungsgemässe Verfahren gewährleistet eine einfache und energieeffiziente Herstellung des hydraulischen Bindemittels. Dadurch, dass der abgetrennte Zementstein zum bzw. vor dem Aktivieren von dem Baureststoff und/oder dem verbleibenden Füllstoff separiert wird, muss lediglich der Zementstein auf eine zum Aktivieren ausreichende Temperatur erwärmt werden. Dementsprechend sind zwei Energiequellen, insbesondere Heizeinrichtungen, erforderlich, eine erste Energiequelle bzw. Heizeinrichtung zum Erwärmen des Baureststoffs auf eine erste zum Schwächen der Bindung ausreichende Temperatur und eine zweite Energiequelle bzw. Heizeinrichtung zum Erwärmen des separierten Zementsteins auf eine vergleichsweise höhere zweite und zum Aktivieren ausreichende Temperatur. Die erste Energiequelle bzw. Heizvorrichtung ist vor und/oder an bzw. in der mindestens einen Rührwerksmühle angeordnet, wohingegen die zweite Energiequelle bzw. Heizeinrichtung nach der mindestens einen Rührwerksmühle angeordnet ist.

Das erfindungsgemässe Verfahren gewährleistet eine einfache und energieeffiziente Herstellung des hydraulischen Bindemittels. Dadurch, dass eine Abwärme bzw. Verlustwärme der zweiten Energiequelle bzw. Heizeinrichtung zum Erwärmen des Baureststoffs in der ersten Energiequelle bzw. Heizeinrichtung genutzt wird, werden Energieverluste in einfacher Weise minimiert. Dadurch, dass die zum Aktivieren erforderliche zweite Temperatur im Vergleich zu der zum Schwächen der Bindung erforderliche erste Temperatur hoch ist, ist die Abwärme der zweiten Energiequelle bzw. Heizeinrichtung in einfacher Weise nutzbar.

Das erfindungsgemässe Verfahren gewährleistet eine einfache und energieeffiziente Herstellung des hydraulischen Bindemittels. Dadurch, dass der Baureststoff auf eine Temperatur erwärmt wird, bei der sowohl die Bindung zwischen dem Zementstein und dem Füllstoff geschwächt als auch der Zementstein aktiviert wird, ist lediglich eine einzige Energiequelle bzw. Heizeinrichtung erforderlich. Die Energiequelle bzw. Heizeinrichtung ist vor oder an der mindestens einen Rührwerksmühle angeordnet, vorzugsweise vor der mindestens einen Rührwerksmühle. Dadurch, dass der Zementstein bereits aktiviert in die mindestens eine Rührwerksmühle zugeführt wird, ist nach der mindestens einen Rührwerksmühle eine Energiequelle bzw. Heizeinrichtung nicht mehr erforderlich.

Insbesondere erfolgt das selektive Mahlen derart, dass mindestens 70 %, insbesondere mindestens 80 %, und insbesondere mindestens 90 %, von im Baureststoff (B_{A}) enthaltenen Inertkörnern nicht zerstört werden. Dies gewährleistet eine einfache und energieeffiziente Herstellung des hydraulischen Bindemittels.

Der Erfindung liegt ferner die Aufgabe zugrunde, eine einfache und energieeffiziente Vorrichtung zur Herstellung eines hydraulischen Bindemittels durch Aufbereitung eines Baureststoffs zu schaffen.

Diese Aufgabe wird durch eine Vorrichtung mit den Merkmalen des Anspruchs 10 gelöst. Die Vorteile der erfindungsgemäßen Vorrichtung entsprechen den bereits beschriebenen Vorteilen des erfindungsgemäßen Verfahrens. Dadurch, dass die mindestens eine Rührwerksmühle eine einstellbare Austragsöffnung aufweist, ist die Intensität der Mahlung durch eine Veränderung der Verweilzeit des Baureststoffs in der mindestens einen Rührwerksmühle und/oder einer Veränderung des Füllgrads der mindestens einen Rührwerksmühle steuerbar. Das mechanische Abtrennen des Zementsteins von dem Füllstoff ist somit einstellbar. Vorzugsweise weist die mindestens eine Rührwerksmühle eine Austragsöffnung auf, deren Austragsfläche durch ein Verschlusselement, wie beispielsweise einen Schieber oder eine Blende, einstellbar ist.

Eine Vorrichtung nach Anspruch 11 gewährleistet ein einfaches und energieeffizientes mechanisches Abtrennen des Zementsteins. Die Rückführung gewährleistet ein mehrfaches mechanisches Behandeln des Baureststoffs in der mindestens einen Rührwerksmühle.

Die erfindungsgemässe Vorrichtung gewährleistet eine einfache und energieeffiziente Herstellung eines hydraulischen Bindemittels. Das Separieren erfolgt nach einer Dichte und/oder Größe der Partikel. Die Trenneinrichtung ist beispielsweise als Sieb und/oder Sichter ausgebildet. Die Trenneinrichtung ist insbesondere vor einer Rückführung angeordnet, so dass der abgetrennte Zementstein von dem ausgetragenen Baureststoff separiert wird, bevor der ausgetragene Baureststoff wieder der mindestens einen Rührwerksmühle zugeführt wird. Die Trenneinrichtung ermöglicht ein Separieren des abgetrennten Zementsteins von dem ausgetragenen Baureststoff, der anschließend wieder in die mindestens eine Rührwerksmühle zurückgeführt wird, um noch anhaftenden Zementstein mechanisch abzutrennen.

Die erfindungsgemässe Vorrichtung gewährleistet eine einfache und energieeffiziente Herstellung des hydraulischen Bindemittels. Mittels der ersten Energiequelle bzw. Heizeinrichtung wird der Baureststoff auf eine erste Temperatur erwärmt, bei der die Bindung zwischen dem Zementstein und dem Füllstoff geschwächt wird, wohingegen mittels der zweiten Energiequelle bzw. Heizeinrichtung der in der mindestens einen Rührwerksmühle abgetrennte und anschließend separierte Zementstein zum Aktivieren auf eine zweite Temperatur erwärmt wird, so dass das hydraulische Bindemittel entsteht. Durch die zwei Energiequellen bzw. Heizeinrichtungen muss ausschließlich der zu aktivierende Zementstein auf die im Vergleich zur ersten Temperatur höhere zweite Temperatur erwärmt werden.

Die erfindungsgemässe Vorrichtung gewährleistet eine einfache und energieeffiziente Herstellung des hydraulischen Bindemittels. Durch den Wärmeübertrager wird die Abwärme bzw. Verlustwärme der zweiten Energiequelle bzw. Heizeinrichtung an die erste Energiequelle bzw. Heizeinrichtung übertragen, wodurch der Energieverlust minimiert wird. Dadurch, dass die zweite Energiequelle bzw. Heizeinrichtung den abgetrennten und separierten Zementstein auf die im Vergleich zu der ersten Temperatur höhere zweite Temperatur erwärmen muss, ist eine Wärmeübertragung zu der ersten Energiequelle bzw. Heizeinrichtung in einfacher Weise möglich.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung einer Vorrichtung zur Herstellung eines hydraulischen Bindemittels durch Aufbereitung eines Baureststoffs gemäß einem ersten Ausführungsbeispiel,
- Fig. 2: eine schematische Darstellung einer autogenen Rührwerksmühle der Vorrichtung in Fig. 1,
- Fig. 3: eine schematische Darstellung einer Vorrichtung zur Herstellung eines hydraulischen Bindemittels durch Aufbereitung eines Baureststoffs gemäß einem zweiten Ausführungsbeispiel,
- Fig. 4: eine schematische Darstellung einer Vorrichtung zur Herstellung eines hydraulischen Bindemittels durch Aufbereitung eines Baureststoffs gemäß einem dritten Ausführungsbeispiel, und
- Fig. 5: eine schematische Darstellung einer autogenen Rührwerksmühle einer Vorrichtung zur Herstellung eines hydraulischen Bindemittels durch Aufbereitung eines Baureststoffs gemäß einem vierten Ausführungsbeispiel.

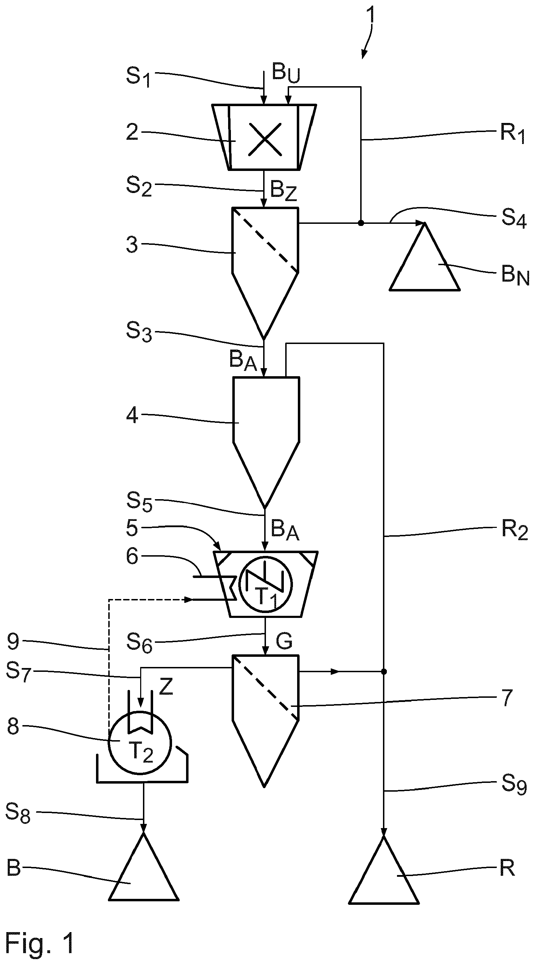

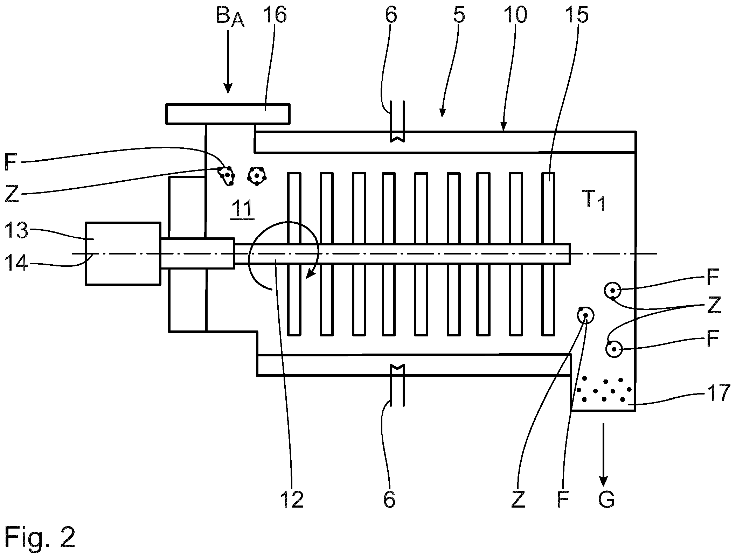

Nachfolgend ist anhand der Fig. 1 und 2 ein erstes Ausführungsbeispiel der Erfindung beschrieben. Eine Vorrichtung 1 zur Herstellung eines hydraulischen Bindemittels B umfasst eine Zerkleinerungseinrichtung 2, eine erste Trenneinrichtung 3, einen Vorratsbehälter 4, eine autogene Rührwerksmühle 5 mit einer integrierten ersten Heizeinrichtung 6 als Energiequelle, eine zweite Trenneinrichtung 7, eine zweite Heizeinrichtung 8 als Energiequelle und einen Wärmeübertrager 9.

In einem Verfahrensschritt Si wird ein unzerkleinerter Baureststoff B_{U} zunächst der Zerkleinerungseinrichtung 2 zugeführt und mittels dieser zerkleinert. Die Zerkleinerungseinrichtung 2 ist beispielsweise als Brecher ausgebildet. In einem Verfahrensschritt S₂ wird der zerkleinerte Baureststoff Bz aus der Zerkleinerungseinrichtung 2 ausgetragen und der ersten Trenneinrichtung 3 zugeführt. Die erste Trenneinrichtung 3 ist beispielsweise als Sieb ausgebildet. Mittels der ersten Trenneinrichtung 3 wird von dem zerkleinerten Baureststoff Bz ein als aufbereitbarer Baureststoff B_{A} bezeichneter Anteil separiert, der eine Korngröße von höchstens 63 mm, insbesondere von höchstens 32 mm, insbesondere von höchstens 24 mm, und insbesondere von höchstens 16 mm aufweist. Der aufbereitbare Baureststoff B_{A} wird in einem Verfahrensschritt S₃ dem Vorratsbehälter 4 zugeführt. Der Vorratsbehälter 4 ist beispielsweise als Silo ausgebildet.

Der verbleibende zerkleinerte Baureststoff Bz wird in einem Verfahrensschritt Ri aus der ersten Trenneinrichtung 3 ausgetragen und über eine Rückführung erneut der Zerkleinerungseinrichtung 2 zugeführt. Die Rückführung erfolgt vorzugsweise mehrfach mit einer Anzahl M, wobei für die Anzahl M beispielsweise gilt: 1 ≤ M ≤ 10, insbesondere 2 ≤ M ≤ 8, und insbesondere 3 ≤ M ≤ 6.

Zerkleinerter Baureststoff Bz, der trotz einer maximalen Anzahl an Rückführungen nicht ausreichend zerkleinert werden konnten, um als aufbereitbarer Baureststoff B_{A} separiert werden zu können, wird in einem Verfahrensschritt S₄ als nicht aufbereitbarer Baureststoff B_{N} ausgeschleust. Der nicht aufbereitbare Baureststoff B_{N} umfasst beispielsweise große Partikel, die schwer zu vermahlen sind und statistisch wenig Zementstein enthalten und/oder Fremdstoffe.

Die Zerkleinerungseinrichtung 2 ist quasi-kontinuierlich oder kontinuierlich betreibbar. Bei dem quasi-kontinuierlichen Betrieb bzw. Batchbetrieb wird der unzerkleinerte Baureststoff Bu der Zerkleinerungseinrichtung 2 chargenweise zugeführt. Demgegenüber wird bei dem kontinuierlichen Betrieb zumindest bei jeder Rückführung der separierte aufbereitbare Baureststoff B_{A} durch unzerkleinerten Baureststoff B_{U} ersetzt.

Der aufbereitbare Baureststoff B_{A} wird in einem Verfahrensschritt S₅ der autogenen Rührwerksmühle 5 zugeführt. Dem aufbereitbaren Baureststoff B_{A} können bei Bedarf Additive bzw. Mahlhilfsmittel zugegeben werden, beispielsweise Alkohole und/oder Salze. Die autogene Rührwerksmühle 5 weist einen Mahlbehälter 10 auf, der einen Mahlraum 11 umschließt. In dem Mahlraum 11 ist eine Rührwerkswelle 12 angeordnet, die einseitig aus dem Mahlraum 11 herausgeführt ist. Die Rührwerkswelle 12 ist in üblicherweise gelagert und mittels eines Antriebsmotors 13 um eine Drehachse 14 drehantreibbar. An der Rührwerkswelle 12 sind Rührwerkzeuge 15 befestigt, die insbesondere stabförmig ausgebildet sind. Zum Zu- und Abführen des Mahlguts, also des Baureststoffs B_{A}, ist in dem Mahlbehälter 10 eine Zuführöffnung 16 und eine Austragsöffnung 17 ausgebildet. Die erste Heizeinrichtung 6 ist an dem Mahlbehälter 10 angeordnet und insbesondere in den Mahlbehälter 10 integriert.

Die Rührwerksmühle 5 ist autogen ausgebildet und weist in dem Mahlraum 11 keine eigenen losen Mahlkörper auf. Der in Form von Körnern vorliegende und durch die Zuführöffnung 16 in den Mahlraum 11 zugeführte aufbereitbare Baureststoff B_{A} bildet selbst die Mahlkörper aus. Die im Mahlraum 11 befindlichen Körner werden aufgrund der Rotation der Rührwerkswelle 12 um die Drehachse 14 ständig mittels der Rührwerkzeuge 15 durchmischt, wodurch sich die Körner wechselseitig mechanisch behandeln. Der Baureststoff B_{A} umfasst einen Füllstoff F und daran anhaftenden Zementstein Z. Durch das wechselseitige mechanische Behandeln der Körner wird im Wesentlichen der Zementstein Z von dem Füllstoff F mechanisch abgetrennt, ohne dass im Wesentlichen der Füllstoff F zerkleinert wird. Anders ausgedrückt, führt das autogene Mahlen des als Körner im Mahlraum 10 vorliegenden Baureststoffs B_{A} dazu, dass der Baureststoff B_{A} zum Abtrennen des Zementsteins Z mechanisch behandelt wird, jedoch über das mechanische Abtrennen des Zementsteins Z hinaus im Wesentlichen nicht unnötig zerkleinert wird. Dies ist in Fig. 2 vereinfacht schematisch dargestellt.

Die Rührwerksmühle 5 wird mit einem Füllgrad des Mahlraums 11 zwischen 30 Vol.-% und 90 Vol.-%, insbesondere zwischen 40 Vol.-% und 80 Vol.-%, und insbesondere zwischen 50 Vol.-% und 70 Vol.-% betrieben. Hierdurch wird in vorteilhafter Weise ein wechselseitiges mechanisches Behandeln des in Form von Körnern vorliegenden Baureststoffs B_{A} gewährleistet.

Um das mechanische Abtrennen des Zementsteins Z zu vereinfachen, wird der Baureststoffs B_{A} in dem Mahlraum 11 mittels der ersten Heizeinrichtung 6 auf eine erste Temperatur T₁ erwärmt, wobei die Temperatur T₁ mindestens 80°C, insbesondere mindestens 160°C, und insbesondere mindestens 320°C beträgt. Durch das Erwärmen des Baureststoffs B_{A} auf die erste Temperatur T₁ wird die Bindung zwischen dem Zementstein Z und dem Füllstoff F geschwächt.

In einem Verfahrensschritt S₆ wird ein Gemisch G aus mechanisch abgetrennten, losem Zementstein Z und aus Baureststoff B_{A}, also aus Füllstoff F mit noch daran anhaftendem Zementstein Z, aus der Austragsöffnung 17 ausgetragen und der zweiten Trenneinrichtung 7 zugeführt. In der zweiten Trenneinrichtung 7 wird der lose Zementstein Z von dem Baureststoff B_{A} separiert. Die zweite Trenneinrichtung 7 ist beispielsweise als Sieb oder Sichter ausgebildet.

In einem Verfahrensschritt S₇ wird der separierte Zementstein Z der zweiten Heizeinrichtung 8 zugeführt. Die zweite Heizeinrichtung 8 ist beispielsweise als Drehofen ausgebildet. In der zweiten Heizeinrichtung 8 wird der Zementstein Z auf eine zweite Temperatur T₂ zwischen 500°C und 1100°C, insbesondere zwischen 600°C und 1000°C, und insbesondere zwischen 650°C und 900°C erwärmt. Durch das Erwärmen auf die zweite Temperatur T₂ wird der Zementstein Z aktiviert, wodurch in bekannter Weise das hydraulische Bindemittel B entsteht. In einem Verfahrensschritt S₈ wird das Bindemittel B aus der zweiten Heizeinrichtung 8 ausgetragen. Dadurch, dass die zweite Temperatur T₂ wesentlich höher als die erste Temperatur T₁ ist, wird die Abwärme bzw. Verlustwärme der zweiten Heizeinrichtung 8 mittels des Wärmeübertragers 9 zu der ersten Heizeinrichtung 6 übertragen und dort zum Erwärmen des Baureststoffs B_{A} auf die erste Temperatur T₁ genutzt.

Der in der zweiten Trenneinrichtung 7 verbleibende Baureststoff B_{A} wird zum weiteren mechanischen Abtrennen von Zementstein Z in einem Verfahrensschritt R₂ in den Vorratsbehälter 4 zurückgeführt und von dort erneut der Rührwerksmühle 5 zugeführt. Der aus der Rührwerksmühle 5 ausgetragene Baureststoff B_{A} wird mehrfach mit einer Anzahl N zurückgeführt, wobei für die Anzahl N gilt: 1 ≤ N ≤ 10, insbesondere 2 ≤ N ≤ 8, und insbesondere 3 ≤ N ≤ 6. Hierdurch wird der Baureststoff B_{A} mehrfach mechanisch behandelt, so dass bei der Rückführung noch anhaftender Zementstein Z sukzessiv mechanisch abgetrennt wird. Der nach einer Anzahl von N Rückführungen verbleibende Baureststoff B_{A} mit nur noch wenig anhaftendem Zementstein Z und der verbleibende Füllstoff F wird in einem Verfahrensschritt S₉ als Zuschlagsstoff R ausgeschleust.

Die Rückführung des ausgetragenen Baureststoffs B_{A} erfolgt quasi-kontinuierlich oder kontinuierlich. Bei der quasi-kontinuierlichen Rückführung wird der Baureststoff B_{A} der Rührwerksmühle 5 chargenweise zugeführt und nach einer Anzahl von N Rückführungen im Verfahrensschritt S₉ ausgeschleust. Bei der kontinuierlichen Rückführung wird der Anteil des separierten Zementsteins Z durch neuen aufbereitbaren Baureststoff B_{A} ersetzt, der anteilig aus dem Vorratsbehälter 4 zugeführt wird.

Dadurch, dass der Baureststoff B_{A} in der Rührwerksmühle 5 erwärmt und nach dem Austragen wieder zurückgeführt wird, bleibt eine Restwärme des ausgetragenen Baureststoffs B_{A} erhalten, so dass die mittels der ersten Heizeinrichtung 6 zusätzlich zuzuführende Wärmeenergie lediglich zur Konstanthaltung der ersten Temperatur T₁ benötigt wird. Hierzu ist im Wesentlichen die mittels des Wärmeübertragers 9 übertragene Abwärme bzw. Verlustwärme der zweiten Heizeinrichtung 8 ausreichend. Zudem wird die ohnehin erforderliche Verweilzeit des Baureststoffs B_{A} in der Rührwerksmühle 5 zum Erwärmen des Baureststoffs B_{A} auf die erste Temperatur T₁ und zum Beibehalten der Temperatur T₁ während der Verweildauer in der Rührwerksmühle 5 genutzt. Hierdurch wird die Verfahrensdauer reduziert.

Das Mahlen in der Rührwerksmühle 5 erfolgt autogen, selektiv und trocken. Der Baureststoff B_{A} kann in der Rührwerksmühle 5 durch ein gasförmiges Fluid transportiert werden, insbesondere durch Luft, inertes Gas oder überhitzten Dampf, wodurch der Zementstein Z vor der zweiten Heizeinrichtung 8 bereits vorgeheizt werden könnte. Zusätzlich kann bereits vor der Rührwerksmühle 5 loser Zementstein Z separiert und der zweiten Heizeinrichtung 8 zugeführt werden.

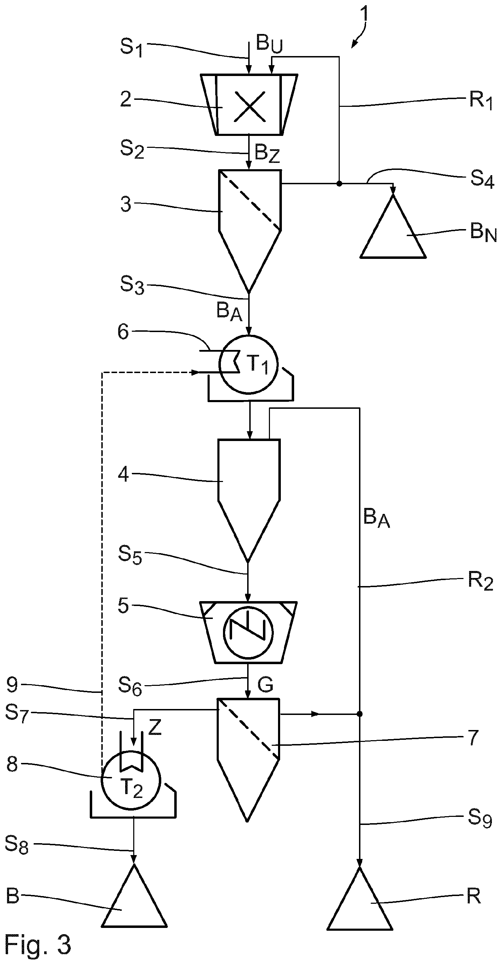

Nachfolgend ist anhand von Fig. 3 ein zweites Ausführungsbeispiel der Erfindung beschrieben. Im Unterschied zu dem ersten Ausführungsbeispiel ist die erste Heizvorrichtung 6 vor der Rührwerksmühle 5 und vor dem Vorratsbehälter 4 angeordnet. Im Verfahrensschritt S₃ wird der aufbereitbare Baureststoff B_{A} zunächst der ersten Heizeinrichtung 6 zugeführt und auf die erste Temperatur T₁ erwärmt und anschließend dem Vorratsbehälter 4 zugeführt. Die erste Heizeinrichtung 6 ist beispielsweise als Drehofen ausgebildet. In der Rührwerksmühle 5 erfolgt im Unterschied zu dem ersten Ausführungsbeispiel keine Erwärmung. Hinsichtlich des weiteren Aufbaus und der weiteren Funktionsweise wird auf das erste Ausführungsbeispiel verwiesen.

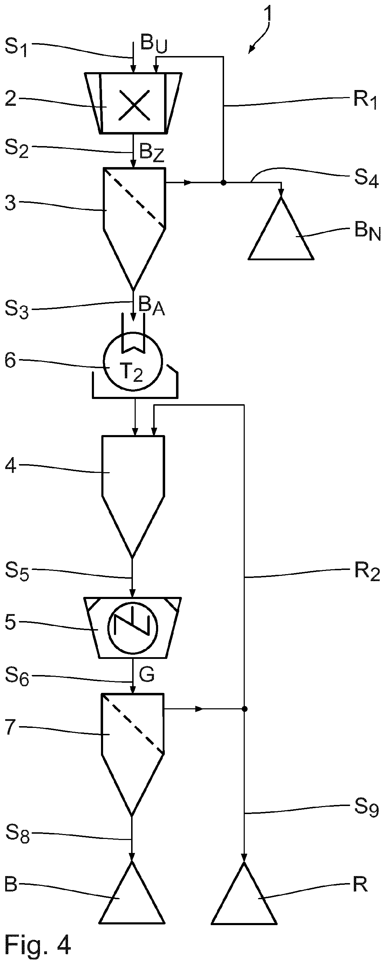

Nachfolgend ist anhand von Fig. 4 ein drittes Ausführungsbeispiel der Erfindung beschrieben. Im Unterschied zu den vorangegangenen Ausführungsbeispielen weist die Vorrichtung 1 lediglich eine Heizeinrichtung 6 auf. Die Heizeinrichtung 6 ist zwischen der ersten Trenneinrichtung 3 und dem Vorratsbehälter 4 angeordnet. Der aufbereitbare Baureststoff B_{A} wird im Verfahrensschritt S₃ zunächst der Heizeinrichtung 6 zugeführt und auf die zweite Temperatur T₂ und somit auch auf die niedrigere erste Temperatur T₁ erwärmt, so dass sowohl die Bindung zwischen dem Zementstein Z und dem Füllstoff F geschwächt als auch der Zementstein Z aktiviert wird. Der Baureststoff B_{A} wird anschließend dem Vorratsbehälter 4 zugeführt. Eine weitere thermische Behandlung findet nachfolgend nicht statt. Der in der Rührwerksmühle 5 mechanisch abgetrennte Zementstein Z ist bereits aktiviert, so dass das Gemisch G, das im Verfahrensschritt S₆ der zweiten Trenneinrichtung 7 zugeführt wird, bereits das hydraulische Bindemittel B und Baureststoff B_{A} mit noch anhaftenden Zementstein Z bzw. Bindemittel B umfasst. Im Verfahrensschritt S₈ wird somit lediglich noch das in der zweiten Trenneinrichtung 7 separate Bindemittel B ausgetragen. Die Heizeinrichtung 6 ist beispielsweise als Drehofen ausgebildet. Eine weitere Heizeinrichtung und ein Wärmeübertrager sind nicht erforderlich. Zusätzlich kann loser und aktivierter Zementstein Z zwischen der Heizeinrichtung 6 und der Rührwerksmühle 5 als Bindemittel B separiert und ausgeschleust werden. Hinsichtlich des weiteren Aufbaus und der weiteren Funktionsweise wird auf die vorangegangen Ausführungsbeispiele verwiesen.

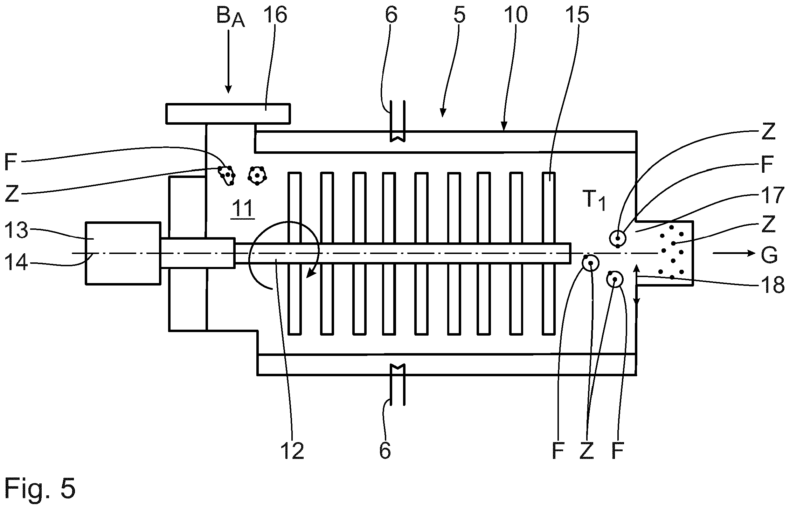

Nachfolgend ist anhand von Fig. 5 ein viertes Ausführungsbeispiel der Erfindung beschrieben. Im Unterschied zu den vorangegangenen Ausführungsbeispielen ist die Austragungsöffnung 17 der Rührwerksmühle 5 mittels eines Verschlusselements 18 in ihrer Austragsfläche einstellbar. Mittels des Verschlusselements 18 ist die Verweilzeit des aufbereitbaren Baureststoffs B_{A} in der Rührwerksmühle 5 und/oder der Füllgrad der Rührwerksmühle 5 einstellbar. Hierdurch ist die Intensität des autogenen Mahlens einstellbar. Hinsichtlich des weiteren Aufbaus und der weiteren Funktionsweise wird auf die vorgegangenen Ausführungsbeispiele verwiesen. Die Rührwerksmühle 5 ist insbesondere in den Vorrichtungen gemäß den Fig. 1, 3 und 4 einsetzbar.

### Allgemein gilt:

Der Calciumsilikathydrat gebundene Baureststoff B_{A} ist ausgewählt aus mindestens einem der Stoffe Abbruchbeton, Betonbrechsand, hydraulische Mörtel, Porenbetonbruch und Kalksandsteinbruch. Bei Abbruchbeton bildet beispielsweise der als Füllstoff vorliegende Quarzanteil die Mahlkörper, also Kies, Sand und Splitt. Das hydraulisch wirksame Bindemittel B kann als Recyclingzement wieder verwendet werden und kann unmittelbar der Anwendung oder einer weiteren Veredelung zugeführt werden. Der Zuschlagstoff R kann als Recyclingzuschlag und/oder Gesteinskörnung und/oder Zuschlag wieder verwendet werden und direkt einer Anwendung oder einer weiteren Aufbereitung zugeführt werden.

Der Zementstein Z bildet eine Fein-Fraktion mit einer Korngröße von höchstens 500 µm, insbesondere von höchstens 250 µm, und insbesondere von höchstens 125 µm. Demgegenüber bildet der verbleibende Baureststoffs B_{A} bzw. Füllstoff F eine Grob-Fraktion mit einer Korngröße von mehr als 500 µm, insbesondere von mehr als 250 µm, und insbesondere von mehr als 125 µm.

Durch das erfindungsgemäße Verfahren und die erfindungsgemäße Vorrichtung wird ein hoher Anteil an Zementstein Z aus dem Baureststoffs B_{A} zurückgewonnen und fein gemahlen und der Zementsein Z durch thermische Behandlung wieder aktiviert, so dass ein hydraulisch wirksames Bindemittel B zurückgewonnen wird. Zugleich wird aus dem Baureststoffs B_{A} ein zementsteinarmer bzw. praktisch zementsteinfreier Zuschlagsstoff R gewonnen, der als Recyclingzuschlag zur Herstellung von neuen Betonen einsetzbar ist. Der Zuschlagsstoff R bildet somit einen wiedergewonnenen Füllstoff bzw. einen Recycling-Füllstoff. Aufgrund der Rückführung ermöglicht die Zerkleinerungseinrichtung 2 und/oder die Rührwerksmühle 5 eine selektive Zerkleinerung bzw. ein selektives Mahlen.

Der Betrieb der Zerkleinerungseinrichtung 2 und/oder der Rührwerksmühle 5 erfolgt quasi-kontinuierlich oder kontinuierlich. Bei dem quasi-kontinuierlichen Betrieb bzw. Batchbetrieb wird das jeweilige Mahlgut M-mal bzw. N-mal zurückgeführt, so dass das Mahlgut insgesamt (M + 1)-mal bzw. (N + 1)-mal durch die Zerkleinerungseinrichtung 2 bzw. die Rührwerksmühle 5 geführt wird. Nach jedem Durchlauf werden beispielsweise x Gewichts-% des Mahlguts entnommen, wobei x in Abhängigkeit der Korngröße des Mahlguts und der Anzahl der Durchläufe variabel ist. Grundsätzlich können die Durchläufe des Mahlguts durch eine Rückführung des Mahlguts und/oder eine Reihenschaltung von Zerkleinerungseinrichtungen 2 bzw. Rührwerksmühlen 5 realisiert werden.

Beim kontinuierlichen Betrieb bzw. Kreislaufbetrieb wird mindestens eine Fraktion des Mahlguts separiert, wobei das restliche Mahlgut wieder zurückgeführt wird und die separierte, mindestens eine Fraktion anteilig durch neues Mahlgut ersetzt wird. Wird beispielsweise nach einem Durchlauf 4/5 Gewichtsanteil des Mahlguts wieder in die Zerkleinerungseinrichtung 2 bzw. die Rührwerksmühle 5 zurückgeführt und die mindestens eine separierte Fraktion mit einem Gewichtsanteil von 1/5 durch neues Mahlgut ersetzt, so ergibt sich hieraus vorzugsweise eine Anzahl an Durchläufen von M +1 = 5 bzw. N + 1 = 5. Die Anzahl der Rückführungen ist dementsprechend M = 4 bzw. N = 4. Die mindestens eine separierte Fraktion ist insbesondere eine Grobfraktion, eine Mittelfraktion und/oder eine Fein-fraktion. Beispielsweise werden x Gewichts-% Grobfraktion, y Gewichts-% Mittelfraktion und z Gewichts-% Feinfraktion nach einem Durchlauf ausgeschleust und durch neues Mahlgut ersetzt. Die Anzahl der Durchläufe definiert sich beispielsweise aus dem Verhältnis der Aufgabeleistung auf die Zerkleinerungseinrichtung 2 bzw. Rührwerksmühle 5 zu der Feinfraktionsleistung bzw. Feinfraktionsausbringung, wobei die Aufgabeleistung die Summe aus dem neu zugeführten Mahlgut und dem zurückgeführten Mahlgut ist. In Abhängigkeit der einstellbaren Variablen x und y ist die Anzahl der Durchläufe einstellbar.

## Patentansprüche

1. Verfahren zur Herstellung eines hydraulischen Bindemittels durch Aufbereitung eines Baureststoffs mit den Schritten:
- Bereitstellen eines Baureststoffs (B_{A}) mit Füllstoff (F) und daran gebundenem Zementstein (Z),
- Erwärmen des Baureststoffs (B_{A}) zum Schwächen der Bindung zwischen dem Zementstein (Z) und dem Füllstoff (F),
- Abtrennen des Zementsteins (Z) von dem Füllstoff (F) durch autogenes Mahlen des Baureststoffs (B_{A}) in mindestens einer Rührwerksmühle (5), wobei die mindestens eine Rührwerksmühle mit einem Füllgrad zwischen 40 Vol.-% und 90 Vol.-% betrieben wird, und
- Aktivieren des Zementsteins (Z) zur Herstellung des hydraulischen Bindemittels (B).

2. Verfahren nach Anspruch 1, **dadurch gekennzeichnet,**
**dass** der Baureststoff (B_{A}) zum Abtrennen des Zementsteins (Z) zumindest teilweise die mindestens eine Rührwerksmühle (5) mehrfach durchläuft.

3. Verfahren nach Anspruch 1 oder 2, **dadurch gekennzeichnet,**
**dass** aus der mindestens einen Rührwerksmühle (5) ausgetragener Baureststoff (B_{A}) zumindest teilweise mehrfach mit einer Anzahl N wieder in die mindestens eine Rührwerksmühle (5) zurückgeführt wird, wobei für die Anzahl N gilt: 1 ≤ N ≤ 10, insbesondere 2 ≤ N ≤ 8, und insbesondere 3 ≤ N ≤ 6.

4. Verfahren nach einem der Ansprüche 1 bis 3, **dadurch gekennzeichnet,**
**dass** zum Schwächen der Bindung zwischen dem Zementstein (Z) und dem Füllstoff (F) der Baureststoff (B_{A}) auf eine Temperatur von mindestens 80°C, insbesondere von mindestens 160°C, und insbesondere von mindestens 320°C erwärmt wird.

5. Verfahren nach einem der Ansprüche 1 bis 4, **dadurch gekennzeichnet,**
**dass** das Erwärmen zum Schwächen der Bindung zwischen dem Zementstein (Z) und dem Füllstoff (F) spätestens in der mindestens einen Rührwerksmühle (5) erfolgt.

6. Verfahren nach einem der Ansprüche 1 bis 5, **dadurch gekennzeichnet,**
**dass** zum Aktivieren der Zementstein (Z) auf eine Temperatur zwischen 500°C und 1100°C, insbesondere zwischen 600°C und 1000°C, und insbesondere zwischen 650°C und 900°C, erwärmt wird.

7. Verfahren nach einem der Ansprüche 1 bis 6, **dadurch gekennzeichnet,**
**dass** der abgetrennte Zementstein (Z) vor dem Aktivieren von dem Baureststoff (B_{A}) separiert wird.

8. Verfahren nach Anspruch 7, **dadurch gekennzeichnet,**
**dass** eine beim Aktivieren des abgetrennten Zementsteins (Z) entstehende Abwärme zum Erwärmen des Baureststoffs (B_{A}) genutzt wird.

9. Verfahren nach einem der Ansprüche 1 bis 8, **dadurch gekennzeichnet,**
**dass** der Baureststoff (B_{A}) auf eine Temperatur zwischen 500°C und 1.100°C erwärmt wird, bei der die Bindung zwischen dem Zementstein (Z) und dem Füllstoff (F) geschwächt und der Zementstein (Z) aktiviert wird.

10. Vorrichtung zur Durchführung eines Verfahrens nach einem der Ansprüche 1 bis 9 zur Herstellung eines hydraulischen Bindemittels durch Aufbereitung eines Baureststoffs
- mit mindestens einer Rührwerksmühle (5) zum autogenen Mahlen von einem Zementstein (Z) umfassenden Baureststoff (B_{A}),
- mit mindestens einer Energiequelle (6, 8; 6) zum Erwärmen des Baureststoffs (B_{A}) und/oder zum Aktivieren des Zementsteins (Z) zur Herstellung des hydraulischen Bindemittels (B),
- wobei die Rührwerksmühle (5) eine einstellbare Auslassöffnung (17) aufweist zur Steuerung der Intensität der Mahlung durch eine Veränderung des Füllgrads der mindestens einen Rührwerksmühle (5).

11. Vorrichtung nach Anspruch 10, **dadurch gekennzeichnet,**
**dass** zum Zurückführen von aus der mindestens einen Rührwerksmühle (5) ausgetragenem Baureststoff (B_{A}) eine Rückführung in einen Zulauf der mindestens einen Rührwerksmühle (5) vorgesehen ist.

12. Vorrichtung nach Anspruch 10 oder 11, **dadurch gekennzeichnet, dass** nach der mindestens einen Rührwerksmühle (5) eine Trenneinrichtung (z) zum Separieren des in der mindestens einen Rührwerksmühle (5) abgetrennten Zementsteins (Z) angeordnet ist.

13. Vorrichtung nach einem der Ansprüche 10 bis 12, **dadurch gekennzeichnet,**
**dass** eine erste Energiequelle, insbesondere eine erste Heizeinrichtung (6), zum Erwärmen des Baureststoffs (B_{A}) vor, an und/oder in der mindestens einen Rührwerksmühle (5) und eine zweite Energiequelle, insbesondere eine zweite Heizeinrichtung (6), zum Aktivieren des Zementsteins (Z) nach der mindestens einen Rührwerksmühle (5) angeordnet ist.

14. Vorrichtung nach Anspruch 13, **dadurch gekennzeichnet,**
**dass** zwischen den Energiequellen, insbesondere den Heizeinrichtungen (6, 8), ein Wärmeübertrager (9) zur Übertragung von Abwärme der zweiten Energiequelle, insbesondere der zweiten Heizeinrichtung (8), zu der ersten Energiequelle, insbesondere der ersten Heizeinrichtung (6), angeordnet ist.

## Claims

1. Method for producing a hydraulic binder by treatment of a building material residue comprising the steps of:
- providing a building material residue (B_{A}) with filler (F) and cement stone (Z) bound thereto,
- heating the building material residue (B_{A}) to weaken the bond between the cement stone (Z) and the filler (F),
- isolating the cement stone (Z) from the filler (F) by autogenous grinding of the building material residue (B_{A}) in at least one agitator mill (5), wherein the at least one agitator mill is operated at a filling level of between 40 % by volume and 90 % by volume, and
- activating the cement stone (Z) to produce the hydraulic binder (B).

2. Method according to claim 1, **characterized in**
**that** the building material residue (B_{A}) passes at least partially through the at least one agitator mill (5) several times to isolate the cement stone (Z).

3. Method according to claim 1 or 2, **characterized in that** building material residue (B_{A}) discharged from the at least one agitator mill (5) is at least partially returned to the at least one agitator mill (5) several times at a number N, the number N being: 1 ≤ N ≤ 10, in particular 2 ≤ N ≤ 8, and in particular 3 ≤ N ≤ 6.

4. Method according to any one of claims 1 to 3, **characterized in that** in order to weaken the bond between the cement stone (Z) and the filler (F), the building material residue (B_{A}) is heated to a temperature of at least 80°C, in particular of at least 160°C, and in particular of at least 320°C.

5. Method according to any one of claims 1 to 4, **characterized in that** the heating for weakening the bond between the cement stone (Z) and the filler (F) takes place at the latest in the at least one agitator mill (5).

6. Method according to any one of claims 1 to 5, **characterized in that** the cement stone (Z) is heated to a temperature between 500°C and 1,100°C, in particular between 600°C and 1,000°C, and in particular between 650°C and 900°C, for activation.

7. Method according to any one of claims 1 to 6, **characterized in that** the isolated cement stone (Z) is separated from the building material residue (B_{A}) before activation.

8. Method according to claim 7, **characterized in**
**that** waste heat generated during activation of the isolated cement stone (Z) is used to heat the building material residue (B_{A}).

9. Method according to any one of claims 1 to 8, **characterized in that** the building material residue (B_{A}) is heated to a temperature between 500°C and 1, 100°C, at which the bond between the cement stone (Z) and the filler (F) is weakened and the cement stone (Z) is activated.

10. Apparatus for implementing a method according to any one of claims 1 to 9 for producing a hydraulic binder by treatment of a building material residue
- including at least one agitator mill (5) for autogenous grinding of a building material residue (B_{A}) comprising a cement stone (Z),
- including at least one energy source (6, 8; 6) for heating the building material residue (B_{A}) and/or for activating the cement stone (Z) to produce the hydraulic binder (B),
- wherein the agitator mill (5) has an adjustable outlet opening (17) for controlling the intensity of the grinding by changing the filling degree of the at least one agitator mill (5).

11. Apparatus according to claim 10, **characterized in that** a return is provided into an inlet of the at least one agitator mill (5) to recycle building material residue (B_{A}) discharged from the at least one agitator mill (5).

12. Apparatus according to claim 10 or 11, **characterized in that** a separating device (z) for separating the cement stone (Z) isolated in the at least one agitator mill (5) is arranged downstream of the at least one agitator mill (5).

13. Apparatus according to any one of claims 10 to 12, **characterized in that** a first energy source, in particular a first heating device (6), for heating the building material residue (B_{A}) is arranged upstream of, on and/or in the at least one agitator mill (5) and a second energy source, in particular a second heating device (6), for activating the cement stone (Z) is arranged downstream of the at least one agitator mill (5).

14. Apparatus according to claim 13, **characterized in that** a heat exchanger (9) for transferring waste heat from the second energy source, in particular the second heating device (8), to the first energy source, in particular the first heating device (6), is arranged between the energy sources, in particular the heating devices (6, 8).

## Revendications

1. Procédé de fabrication d'un liant hydraulique en traitant un résidu de matériau de construction, comprenant les étapes suivantes :
- mise à disposition d'un résidu de matériau de construction (B_{A}) avec un matériau de remplissage (F) et de la pierre de ciment (Z) liée à celui-ci,
- chauffage du résidu de matériau de construction (B_{A}) pour affaiblir la liaison entre la pierre de ciment (Z) et le matériau de remplissage (F),
- isolation de la pierre de ciment (Z) du matériau de remplissage (F) par broyage autogène du résidu de matériau de construction (B_{A}) dans au moins un broyeur agitateur (5), ledit au moins un broyeur agitateur étant exploité avec un degré de remplissage compris entre 40 % en volume et 90 % en volume, et
- activation de la pierre de ciment (Z) pour produire le liant hydraulique (B).

2. Procédé selon la revendication 1, **caractérisé en ce que** le résidu de matériau de construction (B_{A}) passe plusieurs fois, au moins partiellement, à travers ledit au moins un broyeur agitateur (5) pour isoler la pierre de ciment (Z).

3. Procédé selon la revendication 1 ou 2, **caractérisé en ce que** du résidu de matériau de construction (B_{A}) évacué dudit au moins un broyeur agitateur (5) est ramené au moins partiellement plusieurs fois dans ledit au moins un broyeur agitateur (5) avec un nombre N, le nombre N étant : 1 ≤ N ≤ 10, en particulier 2 ≤ N ≤ 8, et en particulier 3 ≤ N ≤ 6.

4. Procédé selon l'une quelconque des revendications 1 à 3, **caractérisé en ce que,** pour affaiblir la liaison entre la pierre de ciment (Z) et le matériau de remplissage (F), le résidu de matériau de construction (B_{A}) est chauffé à une température d'au moins 80°C, en particulier d'au moins 160°C, et en particulier d'au moins 320°C.

5. Procédé selon l'une quelconque des revendications 1 à 4, **caractérisé en ce que** le chauffage pour affaiblir la liaison entre la pierre de ciment (Z) et le matériau de remplissage (F) est effectué au plus tard dans ledit au moins un broyeur-agitateur (5).

6. Procédé selon l'une quelconque des revendications 1 à 5, **caractérisé en ce que,** pour l'activation, la pierre de ciment (Z) est chauffée à une température comprise entre 500°C et 1100°C, en particulier entre 600°C et 1000°C, et en particulier entre 650°C et 900°C.

7. Procédé selon l'une quelconque des revendications 1 à 6, **caractérisé en ce que** la pierre de ciment (Z) isolée est séparée du résidu de matériau de construction (B_{A}) avant l'activation.

8. Procédé selon la revendication 7, **caractérisé en ce qu'**une chaleur perdue produite lors de l'activation de la pierre de ciment (Z) isolée est utilisée pour chauffer le résidu de matériau de construction (B_{A}).

9. Procédé selon l'une quelconque des revendications 1 à 8, **caractérisé en ce que** le résidu de matériau de construction (B_{A}) est chauffé à une température comprise entre 500°C et 1100°C, à laquelle la liaison entre la pierre de ciment (Z) et le matériau de remplissage (F) est affaiblie et la pierre de ciment (Z) est activée.

10. Dispositif pour la mise en oeuvre d'un procédé selon l'une quelconque des revendications 1 à 9 pour la fabrication d'un liant hydraulique en traitant un résidu de matériau de construction
- avec au moins un broyeur agitateur (5) pour le broyage autogène d'un résidu de matériau de construction (B_{A}) comprenant de la pierre de ciment (Z),
- avec au moins une source d'énergie (6, 8 ; 6) pour chauffer le résidu de matériau de construction (B_{A}) et/ou pour activer la pierre de ciment (Z) afin de produire le liant hydraulique (B),
- dans lequel le broyeur agitateur (5) présente une ouverture de sortie réglable (17) pour commander l'intensité du broyage par une modification du degré de remplissage dudit au moins un broyeur agitateur (5).

11. Dispositif selon la revendication 10, **caractérisé en ce que,** pour le retour du résidu de matériau de construction (B_{A}) évacué dudit au moins un broyeur agitateur (5), il est prévu une recirculation dans une entrée dudit au moins un broyeur agitateur (5).

12. Dispositif selon la revendication 10 ou 11, **caractérisé en ce qu**'un dispositif de séparation (z) est disposé après ledit au moins un broyeur-agitateur (5) pour séparer la pierre de ciment (Z) isolée dans ledit au moins un broyeur-agitateur (5).

13. Dispositif selon l'une quelconque des revendications 10 à 12, **caractérisé en ce**
**qu**'une première source d'énergie, en particulier un premier appareil de chauffage (6), est disposée pour chauffer le résidu de matériau de construction (B_{A}) avant, sur et/ou dans ledit au moins un broyeur agitateur (5) et une deuxième source d'énergie, en particulier un deuxième appareil de chauffage (6), est disposée pour activer la pierre de ciment (Z) après ledit au moins un broyeur agitateur (5).

14. Dispositif selon la revendication 13, **caractérisé en ce qu**'entre les sources d'énergie, en particulier les appareils de chauffage (6, 8), est disposé un échangeur de chaleur (9) pour la transmission de la chaleur perdue de la deuxième source d'énergie, en particulier du deuxième appareil de chauffage (8), à la première source d'énergie, en particulier au premier appareil de chauffage (6).
